# FASCICULE DE BREVET EUROPEEN

(11) **EP 3 695 143 B1**
(45) Date de publication et mention de la délivrance du brevet: **19.05.2021**
(21) Numéro de dépôt: 18785322.1
(22) Date de dépôt: 08.10.2018
(51) Int. Cl.: F16H 61/4139

(54) **BALAYAGE DE FLUIDE HYRAULIQUE AU DEMARRAGE**
SPÜLEN VON HYDRAULIKFLÜSSIGKEIT BEIM ANFAHREN
FLUSHING OF HYDRAULIC FLUID ON START-UP

(30) Priorité: 09.10.2017 FR 1759432
(43) Date de publication de la demande: 19.08.2020
(73) Titulaire: Poclain Hydraulics Industrie, 60410 Verberie (FR)
(72) Inventeur: BOZIC, Ante, 60410 Verberie (FR)
(74) Mandataire: Regimbeau
(86) Numéro de dépôt international: PCT/EP2018/077277
(87) Numéro de publication internationale: WO 2019/072745

(56) Documents cités:
- EP-A1- 2 361 798
- US-A- 4 914 592
- US-A1- 2013 192 918

## Description

### DOMAINE TECHNIQUE

L'invention concerne un procédé et un système d'auto-maintenance d'un dispositif d'assistance hydraulique d'un véhicule.

L'invention vise plus spécifiquement l'auto-maintenance d'un dispositif d'assistance hydraulique peu utilisé et/ou dont un fluide hydraulique est usé.

### ETAT DE LA TECHNIQUE

En vue de proposer une motricité supplémentaire à une ou plusieurs roues d'un véhicule, de nombreux dispositifs d'assistance hydraulique à la traction, ou de transmission hydraulique temporaire, pour véhicule ont été proposés (voir par exemple EP2361798A).

Ces dispositifs mettent généralement en œuvre au moins deux machines hydrauliques mises en communication fluidique, et configurées pour transformer une différence de pression entre leur entrée et leur sortie en un couple moteur, et réciproquement.

Typiquement, de tels dispositifs comprennent une pompe hydraulique, dite pompe de puissance, reliée au groupe motopropulseur du véhicule, ladite pompe de puissance débitant dans un ou plusieurs moteurs hydrauliques reliés aux roues non motrices. Ainsi, il est possible de passer d'une propulsion du véhicule de type 4*2 en propulsion type 4*4, par exemple dans des environnements où le véhicule risque de patiner.

Alternativement, l'assistance comprend une première machine hydraulique reliée à l'essieu avant du véhicule, et une deuxième machine hydraulique reliée à l'essieu arrière du véhicule. Ces deux machines peuvent jouer alternativement le rôle de pompe de puissance ou de moteur hydraulique, suivant les besoins en motricité additionnelle requise par l'un ou l'autre des essieux. Ce type de dispositif est conventionnellement désigné sous le titre de « chaîne à vélo », et permet également de transformer un véhicule 4*2 en 4*4.

En tout état de cause, de tels systèmes sont débrayables, de sorte à pouvoir engager ou désengager l'assistance en fonction d'une commande de l'utilisateur et/ou de conditions de roulement du véhicule, par exemple à des seuils de vitesse donnés, ou à un seuil de patinage. Par ailleurs, ces dispositifs sont pilotables sur commande, par un automate ou un utilisateur, de sorte à contrôler en permanence l'assistance fournie aux roues.

Ainsi, un système d'assistance qui ne serait, par exemple, engagé que pour éviter le patinage, pourrait rester très longtemps non engagé. Par exemple un véhicule doté d'un tel système n'activerait l'assistance qu'en cas de neige. Il est ainsi possible que, dans certains pays, l'assistance ne s'engage jamais pendant la plus grande partie de l'année.

Les machines hydrauliques de tels systèmes comprennent généralement un ensemble de pièces mobiles, en mouvement relatif les unes par rapport aux autres sous l'action d'un fluide hydraulique circulant au sein des machines hydrauliques. Or, pour assurer un bon fonctionnement de telles machines, il est nécessaire d'activer régulièrement le mouvement des pièces mobiles, afin d'éviter l'apparition d'usure ou de corrosion au niveau de points de contact, ou de dépôts à différents endroits, en particulier dans les fonds et les filtres. Le contact de pièces immobiles peut entrainer une abrasion ponctuelle quand le véhicule reçoit les vibrations du roulage. Les dépôts peuvent entrainer une certaine polymérisation, le collage des pièces, ou le colmatage de crépines, ce qui risque d'en endommager la surface au moment de redémarrer les machines après un long temps sans activité, et réduit considérablement leur durée de vie.

En outre, les températures élevées de fonctionnement de telles machines peuvent entraîner un vieillissement prématuré du fluide de fonctionnement, par chauffage des dépôts stagnants, à certains endroits localisés particulièrement chauds. Une portion de fluide maintenue immobile dans cette partie du système serait régulièrement chauffée, et pourrait alors se dégrader localement. Ce fluide dégradé pourrait polymériser et créer un bouchon, ou voyager dans le système à la première mise en route, et se placer sur une crépine ou un petit mécanisme. Ceci est particulièrement problématique lorsque les circuits fluidiques des dispositifs d'assistance sont munis de systèmes de filtrage visant à préserver l'ingestion d'impuretés par les composants du dispositif. Typiquement, il est usuel de doter la pompe de gavage de tels circuits d'une crépine de filtrage au point d'aspiration de fluide hydraulique depuis le réservoir. L'encrassement de cette crépine peut rendre indisponible le système d'assistance du fait que la pompe de gavage ne serait plus en capacité d'aspirer à travers cette crépine, et donc de créer la pression nécessaire à l'engagement. Ceci réduit considérablement le temps d'utilisation entre deux vidanges du système.

Outre la réduction de la durée de vie des dispositifs d'assistance hydraulique, les inconvénients précédemment décrits nécessitent des entretiens réguliers par un professionnel. Ces entretiens peuvent s'avérer coûteuses et longues pour l'utilisateur.

Il existe donc un besoin d'assurer la disponibilité à long terme des dispositifs d'assistance hydraulique sans remettre en cause la sûreté du véhicule.

### RESUME DE L'INVENTION

Un but de l'invention est d'assurer une auto-maintenance continue d'un dispositif d'assistance hydraulique de véhicule sans en modifier la structure.

Un autre but de l'invention est d'augmenter la durée de vie d'un dispositif d'assistance hydraulique d'une manière peu coûteuse.

Un autre but de l'invention est d'augmenter l'intervalle de temps séparant deux vidanges d'un dispositif d'assistance hydraulique de véhicule.

L'invention propose notamment un système d'auto-maintenance d'un dispositif d'assistance hydraulique d'un véhicule, ledit dispositif comprenant une machine hydraulique, ladite machine hydraulique comprenant :
- une entrée de fluide,
- une sortie de fluide, et
- des éléments mobiles sous l'action d'un fluide hydraulique circulant au sein de la machine hydraulique,
ladite machine hydraulique étant configurée pour :
- transformer une différence de pression entre l'entrée de fluide et la sortie de fluide en un couple moteur, et réciproquement, de sorte à assurer l'assistance hydraulique, la transformation étant mise en œuvre par mouvement d'éléments mobiles, et
- être alternativement :
   ∘ mise en service de sorte à engager l'assistance hydraulique, ou
   ∘ désactivée de sorte à désengager l'assistance hydraulique,
      la mise en service et la désactivation étant assurés par mouvement d'éléments mobiles de mise en service, et l'engament et le désengagement de l'assistance étant pilotable sur commande,
le système comprenant un module de pilotage configuré pour commander la mise en service de la machine hydraulique durant une durée déterminée, puis commander la désactivation de la machine hydraulique à l'issue de ladite durée de sorte à assurer un balayage de tout ou partie de la machine hydraulique, lesdites commandes de mise en service et de désactivation étant indépendantes d'une commande d'engagement et de désengagement de l'assistance.

Dans un tel système d'auto-maintenance, le module de pilotage force régulièrement la circulation de fluide au sein de tout ou partie de la machine hydraulique, par balayage complet ou partiel de la machine hydraulique, ce qui évite la formation de dépôt entre les pièces. Ce forçage ponctuel est en outre indépendant de commandes d'engagement et/ou de désengagement de l'assistance hydraulique. Ainsi, une conservation de la qualité de fluide hydraulique du système d'assistance hydraulique est rendue possible, réduisant et homogénéisant son usure sur tout le volume du système, même si le système n'est pas sollicité régulièrement. On parle alors d'auto-maintenance continue du système hydraulique. Il est à noter qu'une telle auto-maintenance est différente de l'opération d'entretien périodique réalisée par un professionnel, qui consiste à changer le fluide hydraulique, et éventuellement les filtres du système d'assistance hydraulique. En outre, un tel système offre l'avantage de ne pas modifier les structures existantes de dispositif d'assistance hydraulique, tout en en augmentant significativement la durée de vie par limitation des endommagements dus à des portions de fluide stagnant. Enfin, un tel système permet d'augmenter significativement l'intervalle de temps séparant deux vidanges successives du dispositif d'assistance.

Le système selon l'invention peut en outre comprendre les caractéristiques suivantes prises seules ou en combinaison :
- le dispositif comprend en outre :
   - un réservoir, et
   - une pompe de gavage, la pompe de gavage comprenant :
      ∘ une entrée de fluide mise en communication fluidique avec le réservoir, et
      ∘ une sortie de sortie de fluide mise en communication fluidique avec la machine hydraulique,
   la pompe étant configurée pour faire circuler le fluide hydraulique alternativement :
   - depuis le réservoir vers la machine hydraulique, par action de la pompe de gavage, pour mettre en service la machine hydraulique, et
   - depuis la machine hydraulique vers le réservoir pour désactiver la machine hydraulique.
   le module de pilotage étant configuré pour commander la pompe de gavage,
   - les éléments mobiles de mise en service sont indépendants, le module de pilotage étant configuré pour commander la mise en service puis la désactivation de la machine hydraulique :
      - le véhicule étant en mouvement, le balayage étant assuré par la circulation du fluide hydraulique lors de la transmission des mouvements du couple moteur aux éléments mobiles de la machine hydraulique en service, ou
      - le véhicule étant à l'arrêt, le balayage étant partiellement assuré par les mouvements des éléments mobiles de mise en service lors de la mise en service et de la désactivation successifs de la machine hydraulique,
   - les éléments mobiles de mise en service sont dépendants, le module de pilotage étant configuré pour commander la mise en service puis la désactivation de la machine hydraulique :
      - le véhicule étant en mouvement, le balayage étant assuré par la circulation du fluide hydraulique lors de la transmission des mouvements du couple moteur aux éléments mobiles de la machine hydraulique mise en service, ou
      - le véhicule étant à l'arrêt, le balayage étant assuré par les mouvements des éléments mobiles de mise en service lors de la mise en service et de la désactivation successifs de la machine hydraulique,
   - la machine hydraulique est une pompe hydraulique de puissance reliée à un groupe motopropulseur du véhicule,
   - la machine hydraulique est un moteur hydraulique relié à une roue du véhicule, et
   - le dispositif d'assistance hydraulique comprend :
      - une première machine hydraulique, et
      - une deuxième machine hydraulique,
         l'entrée de fluide de la première machine étant mise en communication fluidique avec la sortie de fluide de la deuxième machine, et
         l'entrée de fluide de la deuxième machine étant mise en communication fluidique à la sortie de fluide de la première machine,
   le module de pilotage étant configuré pour commander la mise en service puis la désactivation de la première machine hydraulique indépendamment de la mise en service puis de la désactivation de la deuxième machine hydraulique.

L'invention porte également sur un véhicule comprenant un dispositif d'assistance hydraulique, et comprenant en outre un système d'auto-maintenance tel que précédemment décrit.

L'invention porte en outre sur un procédé d'auto-maintenance d'un dispositif d'assistance hydraulique d'un véhicule, ledit dispositif comprenant une machine hydraulique, ladite machine hydraulique comprenant :
- une entrée de fluide,
- une sortie de fluide, et
- des éléments mobiles sous l'action d'un fluide hydraulique circulant au sein de la machine hydraulique,
ladite machine hydraulique étant configurée pour :
- transformer une différence de pression entre l'entrée de fluide et la sortie de fluide en un couple moteur, et réciproquement, de sorte à assurer l'assistance hydraulique, la transformation étant mise en œuvre par mouvement d'éléments mobiles, et
- être alternativement :
   ∘ mise en service de sorte à engager l'assistance hydraulique, ou
   ∘ désactivée de sorte à désengager l'assistance hydraulique,
   la mise en service et la désactivation étant également assurés par mouvement d'éléments mobiles de mise en service, et l'engament et le désengagement de l'assistance étant pilotable sur commande,
le procédé comprenant les étapes consistant à
- mettre en service la machine hydraulique durant une durée déterminée, puis
- désactiver la machine hydraulique à l'issue de ladite durée de sorte à assurer un balayage de tout ou partie de la machine hydraulique,
les étapes de mise en service et de désactivation étant mises en œuvre indépendamment d'une commande d'engagement et/ou de désengagement de l'assistance, le procédé étant mis en œuvre par un système d'auto-maintenance précédemment décrit.

Le procédé selon l'invention peut en outre comprendre les caractéristiques suivantes prises seules ou en combinaison :
- il est mis en œuvre pour une plage donnée de vitesse du véhicule, par exemple la vitesse du véhicule étant comprise entre 0 et 40 km/h,
- les étapes de mise en service et de désactivation sont répétées successivement à une fréquence donnée,
- il est mis en œuvre à partir d'un niveau d'usure donné du fluide hydraulique,
- il est mis en œuvre à chaque mise en route du véhicule, et
- il est mis en œuvre à une cadence donnée, ladite cadence pouvant être
   ∘ fonctionnelle, par exemple à chaque fois que le véhicule a parcouru une distance donnée, et/ou
   ∘ temporelle, par exemple une fois tous les mois de fonctionnement du véhicule.

### DESCRIPTIF RAPIDE DES FIGURES

D'autres caractéristiques, buts et avantages de la présente invention apparaitront à la lecture de la description détaillée qui va suivre et en regard des dessins annexés donnés à titre d'exemple non limitatif et sur lesquels :
- Les figures 1 a à 1f illustrent schématiquement différents modes de réalisation d'un système d'auto-maintenance de dispositif d'assistance hydraulique d'un véhicule,
- Les figures 2a et 2b illustrent schématiquement différents modes de réalisation d'un dispositif d'assistance hydraulique d'un véhicule,
- La figure 3 illustre différentes étapes d'un procédé d'auto-maintenance d'un dispositif d'assistance hydraulique d'un véhicule, et
- Les figures 4a et 4b représentent des diagrammes fonctionnels de différentes modes de réalisation d'un procédé d'auto-maintenance d'un dispositif d'assistance hydraulique d'un véhicule.

### DESCRIPTION DETAILLEE DE L'INVENTION

En référence aux figures, on va maintenant décrire un système d'auto-maintenance 1 d'un dispositif d'assistance hydraulique 2 d'un véhicule.

Dans la suite, on entend par auto-maintenance l'ensemble des actions mises en œuvre automatiquement par un système 1 tel que décrit, en vue d'assurer la disponibilité permanente des fonctions d'un dispositif d'assistance hydraulique 2 d'un véhicule. Comme il sera développé plus précisément, l'auto-maintenance d'un dispositif d'assistance hydraulique 2 comprend le désencrassement régulier des différents éléments du dispositif 2, tels que les filtres 101, 103 ou les zones de dépôt, par mise en circulation du fluide hydraulique au sein du dispositif 2. L'auto-maintenance comprend également un renouvellement et une homogénéisation régulière du fluide hydraulique, par brassage et mélange, en vue d'éviter des stagnations de fluide, notamment dans les portions d'éléments du dispositif 2 qui sont proches d'un élément chaud du véhicule.

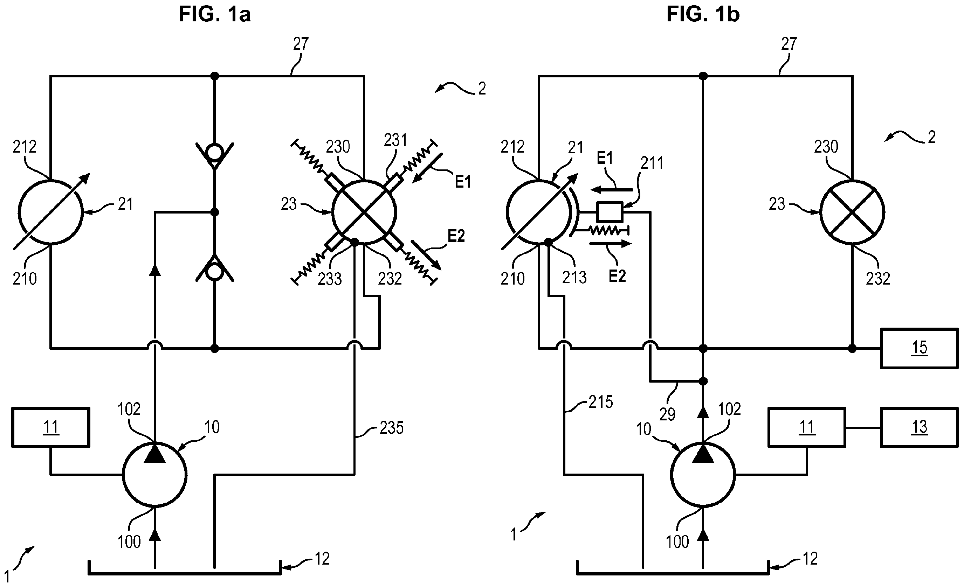

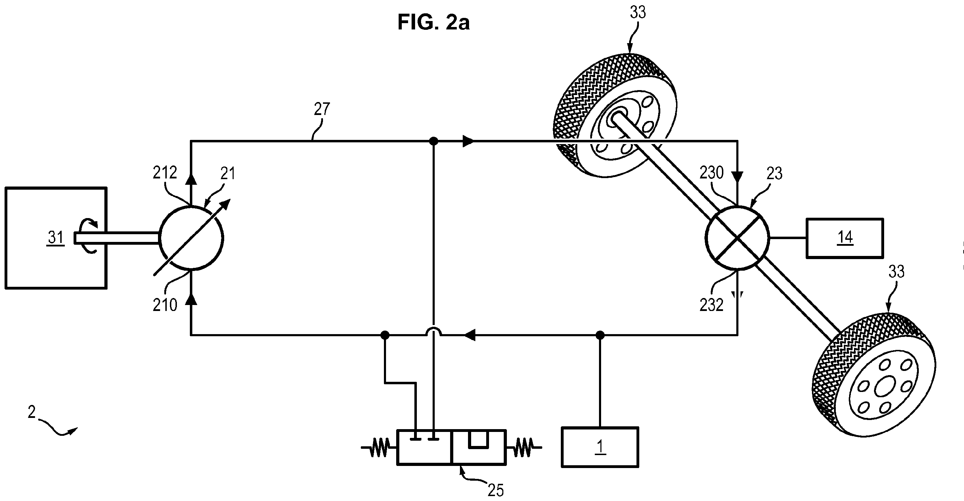

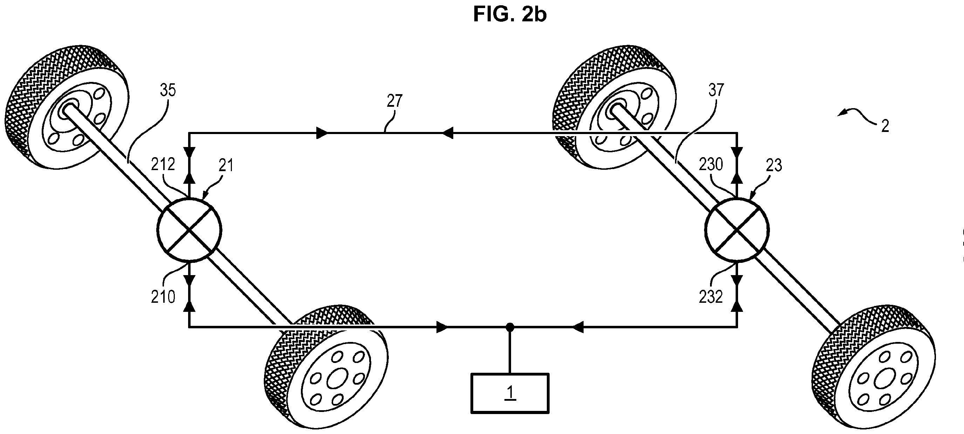

En référence aux figures 1a à 1f, 2a et 2b, un dispositif d'assistance hydraulique 2 d'un véhicule comprend une machine hydraulique 21, 23.
La machine hydraulique 21, 23 comprend une entrée de fluide 210, 230 et une sortie de fluide 212, 232, et des éléments mécaniques mobiles sous l'action d'un fluide hydraulique circulant au sein de la machine hydraulique 21, 23. L'entrée 210, 230 et la sortie 212, 232 de fluide sont généralement mises en communication fluidiques avec un circuit d'assistance hydraulique 27. Une telle machine 21, 23 est alors configurée pour transformer une différence de pression entre l'entrée de fluide 210, 230 et la sortie de fluide 212, 232 en un couple moteur, et réciproquement, la transformation étant mise en œuvre par mouvement d'éléments mobiles de la machine hydraulique 21, 23. Cette transformation permet en outre d'assurer la fonction d'assistance hydraulique du dispositif 2.
La machine hydraulique 21, 23 est également configurée pour être alternativement mise en service ou désactivée, la mise en service et la désactivation assurant respectivement l'engagement et le désengagement de l'assistance hydraulique. A cet égard, la machine hydraulique 21, 23 comprend des éléments mobiles de mise en service 211, 231 également mobiles sous l'action d'un fluide hydraulique circulant au sein de la machine hydraulique 21, 23. A titre d'exemple non limitatif, de tels éléments mobiles 211, 231 peuvent être des embrayages 211 à disques ou à crabot, par exemple du même type que l'état de l'art de boite de vitesse. Dans ce cas, les éléments mobiles de mise en service 211 sont reliés à un circuit fluidique 29 différent du circuit d'assistance hydraulique 27, et leur mouvement est indépendant des autres éléments mobiles de la machine hydraulique 21. On parle alors d'éléments mobiles de mise en service « indépendants » 211. Alternativement de tels éléments peuvent être des pistons radiaux 231 qui se désengagent de leur came par rétractation des pistons 231. Dans ce cas, les éléments mobiles de mise en service 231 sont directement reliés au circuit d'assistance hydraulique 27. Leur mouvement est dépendant des autres éléments mobiles de la machine hydraulique, voire il s'agit des mêmes éléments 231. On parle alors d'éléments mobiles de mise en service « dépendants » 231. La mise en service et la désactivation de telles machines 21, 23 sont par exemples décrites dans les demandes de brevet FR 2 996 267 et FR 3 033 529 au nom de la Demanderesse, et ne seront pas plus détaillés ici.
La machine hydraulique 21, 23 possède en général un drain de carter 215, 235, qui collecte les fuites internes de tous les organes de la machine 21, 23 soumis à pression, et les renvoie vers un réservoir d'huile 12. Plus particulièrement, la machine hydraulique 21, 23 peut posséder un gicleur de fuite 213, 233 destiné à renouveler l'huile, et refroidir certains organes internes, qui est relié à un drain 215, 235 par lequel le fluide hydraulique en excès peut être évacué vers le réservoir 12.

Toujours en référence aux figures 1a à 1f, 2a et 2b, un véhicule doté d'un tel dispositif d'assistance hydraulique 2 comprend un système d'auto-maintenance 1 du dispositif 2. Ce système 1 comprend notamment un module de pilotage 11 configuré pour commander l'assistance hydraulique. Plus précisément, le module de pilotage 11 est configuré pour recevoir une commande d'engagement ou de désengagement de l'assistance hydraulique, et transmettre une commande correspondante de mise en service ou de désactivation de la machine hydraulique 21, 23.
L'engagement et le désengagement de l'assistance est pilotable sur commande. A cet égard, la commande d'engagement ou de désengagement de l'assistance hydraulique peut être transmise au module de pilotage 11 directement par un utilisateur. Alternativement une telle commande peut être transmise par un automate 13 du véhicule en fonction des conditions de roulement. Typiquement, l'automate 13 requiert l'assistance hydraulique lorsqu'un patinage est détecté, par exemple lorsque le véhicule aborde des surfaces neigeuses ou sablonneuses. De même, l'automate 13 coupe l'assistance hydraulique lorsque les vitesses atteintes par le véhicule sont supérieures à un niveau admissible par la machine hydraulique 21, 23. Le module de pilotage 11 est en outre configuré pour commander la mise en service de la machine hydraulique 21, 23 durant une durée déterminée, puis la désactivation de la machine hydraulique 21, 23 à l'issue de la durée déterminée de mise en service, ladite commande étant indépendante d'une commande d'engagement, respectivement de désengagement, de l'assistance. Plus précisément, le module de pilotage 11 est configuré pour piloter le fonctionnement du dispositif d'assistance hydraulique 2 alternativement en réponse à une commande d'engagement ou désengagement, ou de sa propre initiative, à des fins d'auto-maintenance, sans avoir reçu une commande d'engagement et/ou de désengagement. En effet, la mise en service de la machine hydraulique 21, 23 durant une durée déterminée, puis la désactivation de la machine hydraulique 21, 23, assurent la mise en mouvement d'éléments mobiles de la machine hydraulique 21, 23 pour forcer la circulation de fluide hydraulique au sein de tout ou partie de la machine hydraulique 21, 23. On parle de balayage complet ou partiel de la machine hydraulique 21, 23. Une auto-maintenance régulière du dispositif d'assistance hydraulique 2 est ainsi avantageusement rendue possible.

En référence à la figure 2a, la machine hydraulique peut être une pompe hydraulique de puissance 21. Dans ce cas, la pompe de puissance 21 est reliée, pour son entrainement, à un groupe motopropulseur 31 du véhicule. Les éléments mobiles de la pompe de puissance 21 sont alors configurés pour que leurs mouvements permettent de transformer le couple fourni par le groupe propulseur 31 en différence de pression entre l'entrée 210 et la sortie de fluide 212 de la pompe de puissance 21.

Alternativement, toujours en référence à la figure 2a, la machine hydraulique est un moteur hydraulique 23. Le moteur 23 est relié à une roue 33 du véhicule. Les éléments mobiles du moteur 23 sont alors configurés pour que leurs mouvements permettent de transformer une différence de pression entre l'entrée 230 et la sortie 232 de fluide du moteur 23 en un couple transmis à la roue 33, lorsque l'assistance est engagée. La roue 33 est typiquement une roue porteuse non reliée à la transmission mécanique d'un véhicule 4*2. Lorsque l'assistance est désengagée et que le véhicule est en mouvement, le moteur 23 étant par ailleurs mis en service, les éléments mobiles peuvent être mis en mouvement sous l'action du couple exercé par la roue 33 en rotation. Cependant, il existe en général une limite de vitesse de véhicule au-dessus de laquelle un module de sécurité 14 du dispositif d'assistance hydraulique 2 désactive automatiquement le moteur hydraulique 23, pour préserver la sûreté du moteur 23.

En référence à la figure 2a, le dispositif d'assistance hydraulique peut également comprendre une première machine hydraulique 21, et une deuxième machine hydraulique 23, l'entrée 210 de la première machine 21 étant mise en communication fluidique avec la sortie 232 de la deuxième machine 23, et l'entrée 230 de la deuxième machine 23 étant mise en communication fluidique à la sortie 212 de la première machine 21.
Typiquement, la première machine 21 peut être une pompe hydraulique de puissance, tandis que la deuxième machine hydraulique 23 peut être un moteur hydraulique. Le circuit hydraulique reliant la pompe de puissance 21 au moteur comprend alors avantageusement une valve de bypass 25. Le module de pilotage est ainsi configuré pour commander la mise en service puis la désactivation de la première machine hydraulique 21 indépendamment de la mise en service puis la désactivation de la deuxième machine hydraulique 23.
Alternativement, en référence à la figure 2b, le dispositif 2 est de type « chaîne à vélo ». Dans ce cas, la première machine hydraulique 21 est reliée à l'essieu avant 35 du véhicule, et la deuxième machine hydraulique 23 est reliée à l'essieu arrière 37 du véhicule. La première machine 21 et la deuxième machine hydrauliques 23 peuvent alors être configurées pour alternativement assurer la fonction de pompe de puissance ou de moteur, suivant les besoins en motricité additionnelle requise par l'un ou l'autre des essieux 35, 37. Le module de pilotage 11 est alors configuré pour mettre en œuvre la mise en service et/ou la désactivation des machines 21, 23 de manière simultanée.

Différents modes de réalisation d'un système d'auto-maintenance 1 d'un dispositif d'assistance hydraulique d'un véhicule vont maintenant être décrits, en référence aux figures 1a à 1f.

Un dispositif d'assistance hydraulique 2 comprend généralement un réservoir 12 et une pompe de gavage 10, la pompe de gavage 10 comprenant :
- une entrée de fluide 100 mise en communication fluidique avec le réservoir 12, et
- une sortie de fluide 102 mise en communication fluidique avec la machine hydraulique 21, 23,

La pompe de gavage 10 peut être électrique ou être reliée au groupe motopropulseur 31 du véhicule. La pompe de gavage 10 est par ailleurs configurée pour faire circuler un fluide hydraulique alternativement :
- depuis le réservoir 12 vers la machine hydraulique 21, 23 pour mettre en service la machine hydraulique 21, 23 de sorte à y mettre en mouvement les éléments mobiles de mise en service 211, 231, et à y maintenir une pression suffisante pour maintenir la machine 21, 23 en service, et
- depuis la machine hydraulique 21, 23 vers le réservoir 12 pour désactiver la machine hydraulique 21, 23, entraînant ainsi une diminution de la pression à l'intérieur de la machine hydraulique 21, 23 et mettant également en mouvement les éléments mobiles de mise en service 211, 231.

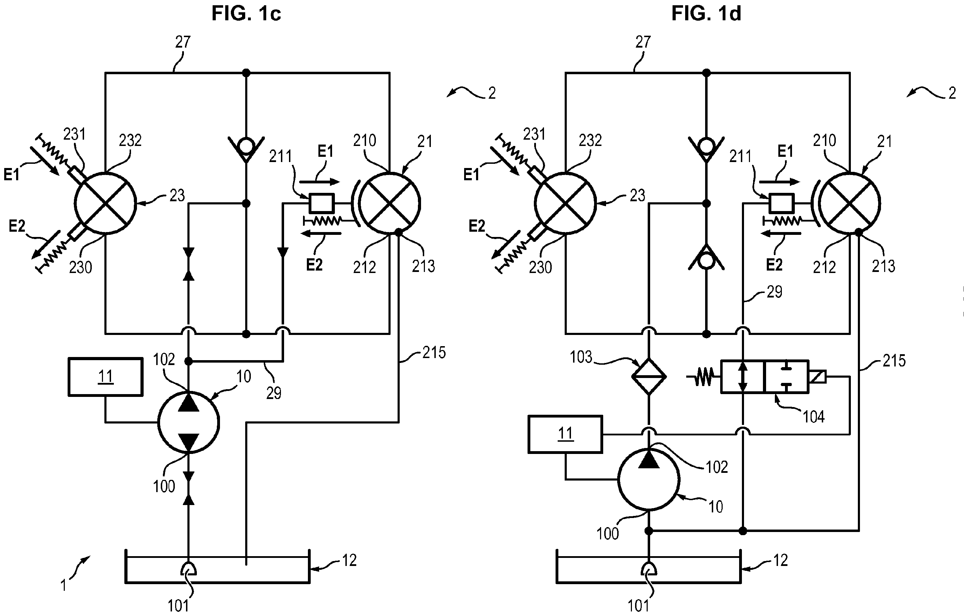

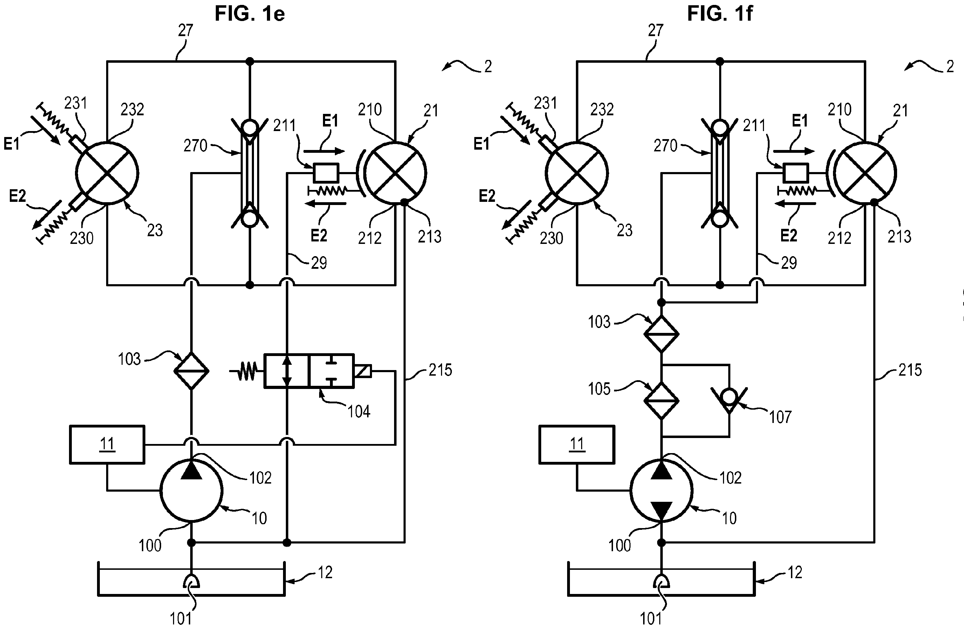

Typiquement, en référence aux figures 1a, 1d et 1e la machine hydraulique 23, 21 possède une entrée de fluide 230, 210 mise en communication fluidique avec la sortie de fluide 102 de la pompe de gavage 10, et une sortie de fluide, par exemple le gicleur de fuite 233, 213, mise en communication fluidique avec le réservoir 12, par exemple au moyen du drain 235, 215. Dans ce cas, le module de pilotage 11 commande la mise en service de la machine hydraulique 23 par activation de la pompe de gavage 10 qui débite le fluide hydraulique dans la machine hydraulique 23. De même, le module de pilotage 11 commande la désactivation de la machine hydraulique 23 par désactivation de la pompe de gavage 10, ce qui entraîne une évacuation du fluide depuis la machine hydraulique 23 vers le réservoir 12, via le drain 235.

Alternativement, en référence aux figures 1c et 1f, la machine hydraulique 23, 21 possède un orifice d'entrée-sortie de fluide 230, 210 mis en communication fluidique avec la sortie de fluide 102 de la pompe de gavage 10, la pompe de gavage 10 fonctionnant en outre par contra rotation, c'est-à-dire qu'elle est configurée pour débiter du fluide hydraulique depuis le réservoir 12 vers la machine hydraulique 23 et réciproquement, par l'intermédiaire d'un seul conduit de communication fluidique. Le fonctionnement d'une telle pompe de gavage 10 est par exemple décrite dans la demande de brevet FR 3 033 529 au nom de la Demanderesse. Dans ce cas le module de pilotage 11 commande la mise en service de la machine hydraulique 23 par activation de la pompe de gavage 10 dans un premier sens de débit, et la désactivation par activation de la pompe de gavage 10 dans un second sens de débit, opposé au premier sens.

Avantageusement, en référence aux figure 1c à 1f, la pompe de gavage 10 comprend une crépine 101 disposée entre le réservoir 12 et l'entrée de fluide 100 de la pompe de gavage 10, et un filtre principal 103 disposée entre la sortie 102 de la pompe de gavage 10, et le circuit d'assistance hydraulique 27. La crépine 101 et le filtre principal 103 filtrent le fluide en provenance du réservoir 12, de sorte à préserver le dispositif d'assistance hydraulique 2 de l'ingestion de pollutions particulaires. La crépine 101 et le filtre principal 103 sont particulièrement utiles lorsque le fluide hydraulique est usagé et/ou a été soumis à des températures importantes.

Cependant, la crépine 101 et le filtre principal 103 ont tendance à se colmater au bout d'un certain temps de fonctionnement du dispositif d'assistance hydraulique 2. Le fonctionnement du module de pilotage 11 du système d'auto-maintenance 1 permet alors, en plus du balayage de la machine hydraulique 21, 23, de décolmater la crépine 101 et/ou le filtre principal 103.

Dans un mode de réalisation du système d'auto-maintenance 1 illustré sur la figure 1c, c'est la mise en service et la désactivation successive de la machine hydraulique 21, 23, par activation successive de la pompe de gavage 10 dans deux sens de débit opposés, qui assure une circulation du fluide hydraulique à travers la crépine 101 successivement dans deux sens de circulation opposés. Au moment de la désactivation de la machine hydraulique 21, 23, le flux inverse de fluide hydraulique permet de décolmater la crépine 101 en relâchant dans le réservoir les impuretés qu'elle a accumulées.
Dans un autre mode de réalisation illustré sur la figure 1d, la pompe de gavage 10 fonctionne classiquement, et le système d'auto-maintenance 1 comprend en outre une valve de mise à vide 104 commandée par le module de pilotage 11. La valve de mise à vide 24 permet de vidanger tout ou partie du circuit d'assistance hydraulique 27, de préférence en étant reliée à la branche haute pression du circuit d'assistance hydraulique 27 la plus probable (i.e. comme illustré sur la figure 1d, en marche avant), et/ou les éléments mobiles indépendants 211. Pour se faire, la valve de mise à vide 104 est mobile entre une position passante et une position isolante, sur commande du module de pilotage 11. Dans ce cas, le module de pilotage 11 commande la mise en service de la machine hydraulique 21, 23 par activation de la pompe de gavage 10 qui débite le fluide hydraulique dans la machine hydraulique 21, 23, la valve de mise à vide 104 étant isolante. De même, le module de pilotage 11 commande la désactivation de la machine hydraulique 21, 23 par désactivation de la pompe de gavage 10 et commande la valve de mise à vide 104 en mode passante, ce qui entraîne une évacuation du fluide depuis la machine hydraulique 23, 21 vers le réservoir 12, via le drain 215 et le circuit fluidique 29, tous deux reliés à la crépine 101. Le flux retour de fluide hydraulique permet de décolmater la crépine 101 en relâchant dans le réservoir les impuretés qu'elle a accumulées. Alternativement, la pompe de gavage 10 est à contra-rotation, et la mise en service ainsi que la désactivation successive de la machine hydraulique 21, 23, par activation successive de la pompe de gavage 10 dans deux sens de débit opposés, assure une circulation du fluide hydraulique à travers la crépine 101 et le filtre principale 103 successivement dans deux sens de circulation opposés.
Dans un mode de réalisation alternatif illustré en figure 1e, le système d'auto-maintenance 1 comprend, outre la valve de mise à vide 104, un sélecteur basse pression 270 (ou « inverse shuttle valve », dans la terminologie anglo-saxonne) reliant les deux lignes du circuit d'assistance hydraulique 27 à la ligne de gavage. Cela permet de gaver la ligne du circuit d'assistance hydraulique 27 qui a toujours la pression la plus basse. Le sélecteur 270 laisse ouvert en permanence la ligne de plus basse pression avec la ligne de gavage. Un tel sélecteur 270 est par exemple décrit dans la demande FR 3 033 529 au nom de la Demanderesse, et ne sera pas plus détaillé ici. Ainsi, le module de pilotage 11 commande la mise en service de la machine hydraulique 21, 23 par activation de la pompe de gavage 10 qui débite le fluide hydraulique dans la machine hydraulique 21, 23, la valve de mise à vide étant isolante. De même, le module de pilotage 11 commande la désactivation de la machine hydraulique 21, 23 par désactivation de la pompe de gavage 10 et commande la valve de mise à vide 104 en mode passante. D'une part, ceci entraîne une évacuation du fluide depuis la ligne haute pression du circuit d'assistance hydraulique 27 et de la machine hydraulique 21, 23 vers le réservoir 12, via respectivement le circuit fluidique 29 et le drain 215, tous deux reliés à la crépine 101. D'autre part, ceci entraîne une évacuation du fluide depuis la ligne basse pression du circuit d'assistance hydraulique 27 vers le réservoir 12, via le filtre principal 103. Un décolmatage du filtre principale 103 et de la crépine 101 est alors avantageusement obtenu par ces retours de flux. Alternativement, la pompe de gavage 10 est à contra-rotation, et la mise en service ainsi que la désactivation successive de la machine hydraulique 21, 23, par activation successive de la pompe de gavage 10 dans deux sens de débit opposés, assure une circulation du fluide hydraulique à travers la crépine 101 et le filtre principale 103 successivement dans deux sens de circulation opposés.
Dans un mode de réalisation illustré en figure 1f, le système d'auto-maintenance 1 comprend, outre le sélecteur basse pression 270, un filtre secondaire 105 disposé entre le filtre principal 103 et la sortie 102 de la pompe de gavage 10. Parallèlement au filtre secondaire 105 se trouve un clapet de by-pass 107. En outre, le circuit fluidique 29 de mise à vide des éléments mobiles indépendants 211 est relié à la sortie du filtre principal 103. Ainsi, lorsque le module de pilotage 11 commande la mise en service de la machine hydraulique 21, 23 par activation de la pompe de gavage 10 qui débite le fluide hydraulique dans la machine hydraulique 21, 23, le flux passe par le clapet 107. Puis, lorsque le module de pilotage 11 désactive la pompe de gavage 10, le fluide reflue par le circuit fluidique 29 et la ligne basse pression via le sélecteur 270 à travers le filtre principal 103 qui décharge alors ses impuretés dans le filtre secondaire 105. Alternativement, la pompe de gavage 10 est à contra-rotation, et la mise en service ainsi que la désactivation successive de la machine hydraulique 21, 23, par activation successive de la pompe de gavage 10 dans deux sens de débit opposés, assure une circulation du fluide hydraulique à travers le filtre principale 103 successivement dans deux sens de circulation opposés, avec rétention des impuretés au retour par le filtre secondaire 105.

En tout état de cause, dans un système 1 configuré pour assurer une auto-maintenance continue du dispositif d'assistance hydraulique 2, le module de pilotage 11 commande la pompe de gavage 10 et/ou la valve de mise à vide 104 préférentiellement de manière indépendante d'une commande d'engagement ou de désengagement de l'assistance à la traction du véhicule. Ceci autorise un balayage fluidique de tout ou partie de la machine hydraulique 21, 23 et/ou un décolmatage de la crépine 101 et du filtre principal 103 qui soient réguliers, même si l'assistance n'est pas requise par ailleurs. En outre, pour une mise en service et une désactivation rapide de l'assistance hydraulique, il est préférable que le système d'auto-maintenance 1 comprenne la valve de mise à vide 104 et/ou la pompe de gavage à contra-rotation 10.

Dans un premier mode de réalisation, en référence aux figures 1b et 1c à 1f, les éléments mobiles de mise en service 211 sont indépendants, par exemple constituent un embrayage à disque 211, permettant d'engager ou de désengager la machine 21 de son arbre d'entrainement (non représenté).

Le module de pilotage 11 est alors configuré pour commander la mise en service puis la désactivation de la machine hydraulique 21 :
- le véhicule étant en mouvement, le balayage étant assuré par la circulation du fluide hydraulique lors de la transmission des mouvements du couple moteur du groupe motopropulseur 31 ou de la roue 33 aux éléments mobiles de la machine hydraulique 21 en service, ou
- le véhicule étant à l'arrêt, le balayage étant partiellement assuré par les seuls mouvements des éléments mobiles de mise en service 211 lors de de la mise en service et de la désactivation successifs de la machine hydraulique 21.

Le module de pilotage 11 commande la mise en service et/ou la désactivation de la machine hydraulique 21 en particulier de manière indépendante d'une commande d'engagement et/ou de désengagement de l'assistance. Ceci autorise un balayage fluidique partiel ou complet de la machine hydraulique 21, même si l'assistance n'est pas requise par ailleurs.

Dans un deuxième mode de réalisation, en référence aux figures 1a et 1c à 1f, les éléments mobiles de mise en service 231 sont dépendants, par exemple comprennent des pistons radiaux rétractables 231.

Le module de pilotage 11 est alors configuré pour commander la mise en service puis la désactivation de la machine hydraulique 23 :
- le véhicule étant en mouvement, le balayage étant assuré par la circulation du fluide hydraulique lors de la transmission des mouvements du couple moteur du groupe motopropulseur 31 ou de la roue 33 aux éléments mobiles de la machine hydraulique 23 en service, ou
- le véhicule étant à l'arrêt, le balayage étant assuré par les mouvements des éléments mobiles de mise en service 231 lors de la mise en service et de la désactivation successifs de la machine hydraulique 23.

De la même manière que dans le premier mode de réalisation, le module de pilotage 11 commande la mise en service et/ou la désactivation de la machine hydraulique 23 en particulier de manière indépendante d'une commande d'engagement et/ou de désengagement de l'assistance. Ceci autorise un balayage fluidique plus complet de la machine hydraulique 23, en particulier si l'assistance est requise, et que la machine réalise un tour complet.

En tout état de cause, en référence à la figure 1b, le module de pilotage 11 peut avantageusement comprendre un automate 13 configuré pour mettre en œuvre automatiquement un procédé d'auto-maintenance E d'un dispositif d'assistance hydraulique 2.

En outre, toujours en référence à la figure 1b, le module de pilotage 11 peut comprendre un module 15 d'estimation du niveau d'usure du fluide hydraulique. Ce module 15 peut par exemple mesurer l'intensité du courant consommé par la pompe de gavage 10. L'usure du fluide hydraulique est en effet directement corrélée à la puissance nécessaire pour la mise en pression du circuit hydraulique d'assistance 27. Alternativement, ce module 15 peut estimer le niveau d'usure du fluide hydraulique à partir de l'état de vieillissement de celui-ci. L'état de vieillissement d'un fluide hydraulique est caractérisé par plusieurs paramètres, dont le cisaillement du fluide, l'oxydation du fluide, et sa contamination particulaire. La connaissance de l'ensemble de ces paramètres, seuls ou en combinaison, et de leur évolution lors du fonctionnement du dispositif d'assistance hydraulique 2, permet notamment d'estimer la viscosité du fluide hydraulique en fonction de sa température. La viscosité du fluide hydraulique peut également être déterminée directement par des capteurs configurés à cet effet., En tout état de cause, le module de pilotage 11 est alors configuré pour recevoir une information relative à l'état d'usure du fluide hydraulique.

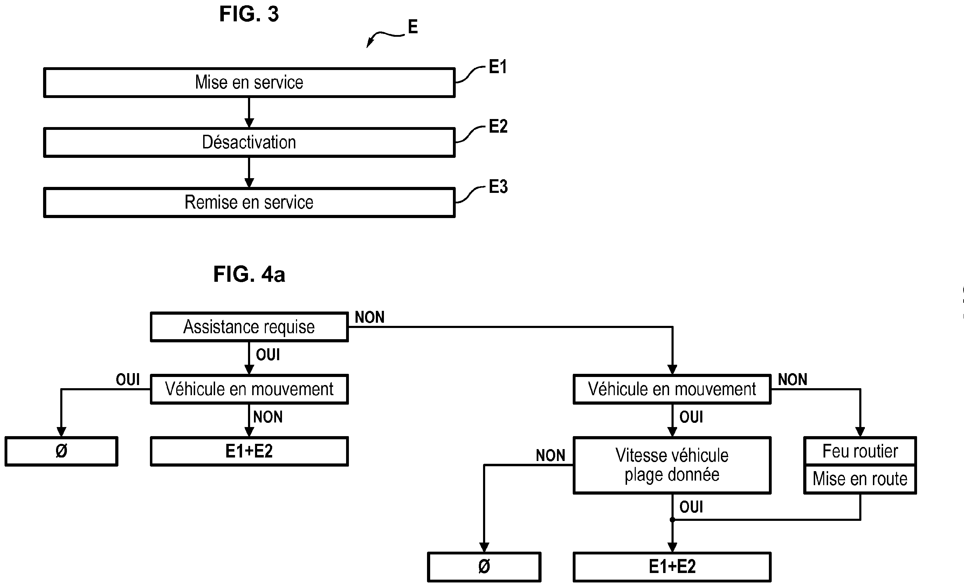

En référence à la figure 3, on va à présent décrire un procédé d'auto-maintenance E d'un dispositif d'assistance hydraulique 2 d'un véhicule, le procédé d'auto-maintenance E étant mis en œuvre par un système d'auto-maintenance 1 selon l'un quelconque des modes de réalisation précédemment décrits.

Un tel procédé E comprend les étapes consistant à :
- mettre en service E1 la machine hydraulique 21, 23 durant une durée déterminée, puis
- désactiver E2 la machine hydraulique 21, 23 à l'issue de ladite durée.

Ceci assure un balayage de tout (balayage complet) ou partie (balayage partiel) de la machine hydraulique 21, 23 par la mise en mouvement des éléments mobiles pour forcer la circulation de fluide hydraulique, les étapes de mise en service E1 et de désactivation E2 étant en outre mises en œuvre indépendamment d'une commande d'engagement et/ou de désengagement de l'assistance. Ceci assure une auto-maintenance régulière du dispositif d'assistance hydraulique 2, même si l'assistance n'est pas requise par ailleurs, notamment si elle est rarement requise.

Avantageusement, l'étape de désactivation E2 peut également être mise en œuvre par le module de sécurité 14 en vue de préserver la sûreté de la machine hydraulique 21, 23 lorsque le véhicule atteint des vitesses trop importantes.

De manière encore plus avantageuse, l'alternance des étapes de mise en service E1 et de désactivation E2 est répétée successivement à une fréquence donnée, par exemple dix fois de suite, de sorte à homogénéiser le balayage de la machine hydraulique 21, 23. Cette alternance peut être préenregistrée par un utilisateur ou le constructeur.

La durée de l'étape de mise en service E1 peut être préenregistrée par le constructeur du système d'auto-maintenance 1. Alternativement, dans le cas où la machine hydraulique 23 est reliée à une roue 33 de véhicule, la machine hydraulique 23 est mise en service pendant une durée correspondant à un tour de roue 23.

Avantageusement, le procédé E est mis en œuvre à une cadence donnée, ladite cadence pouvant être fonctionnelle et/ou temporelle, par exemple une fois tous les mois de fonctionnement du véhicule. Par cadence fonctionnelle, on comprend que le procédé E est mis en œuvre à une cadence qui dépend de la manière dont le dispositif d'assistance assistance hydraulique 2 est utilisé, par exemple à chaque fois que le véhicule a parcouru une distance donnée, lorsque que le véhicule atteint un taux d'emploi ou un taux de charge définis, ou quand des seuils de pression sont atteints dans le circuit hydraulique d'assistance 27.

Avantageusement, le procédé E est mis en œuvre à partir d'un niveau d'usure donné du fluide

Dans un premier mode de réalisation du procédé E, en référence à la figure 4a, l'assistance n'est pas requise par ailleurs.
Dans ce cas, si le véhicule est en mouvement, alors le procédé est mis en œuvre pour une plage donnée de vitesse du véhicule, par exemple la vitesse du véhicule étant comprise entre 0 et 40 km/h. Au-delà d'un certain niveau de vitesse de véhicule, mettre en service la machine hydraulique sur une roue peut détériorer ladite machine.
Alternativement, le procédé E peut être mis en œuvre tandis que le véhicule est à l'arrêt, typiquement à un feu routier, de manière préférentielle à chaque mise en route du véhicule. Ceci présente l'avantage de ne pas interférer avec la conduite du véhicule. Dans ce cas, si les éléments mobiles de mise en service 211 sont indépendants, alors le balayage n'est que partiel.
De manière préférentielle, l'étape de mise en service E1 est mise en œuvre sur une durée correspondant à une rotation complète d'une machine hydraulique 21, 23 du véhicule, ce qui permet de faire bouger toutes les pièces, et de renouveler entièrement le fluide hydraulique contenu dans les cylindres de la machine 21, 23, mais aussi de faire circuler le fluide hydraulique dans les conduites plus complétement. En particulier si une rotation d'une machine 21, 23 correspond à un tour de roue 33, la durée correspondra à une rotation complète d'une roue 33.

Dans un second mode de réalisation du procédé E, toujours en référence à la figure 4a, l'assistance est requise par ailleurs.
Dans ce cas, si le véhicule est en mouvement, le procédé E n'est pas mis en œuvre, et le balayage est assuré par le fonctionnement nominal du dispositif d'assistance hydraulique 2.

Alternativement, le procédé E peut être mis en œuvre tandis que le véhicule est à l'arrêt, typiquement à un feu routier, de manière préférentielle à chaque mise en route du véhicule. Dans ce cas, si les éléments mobiles de mise en service 211 sont indépendants, alors le balayage n'est que partiel.

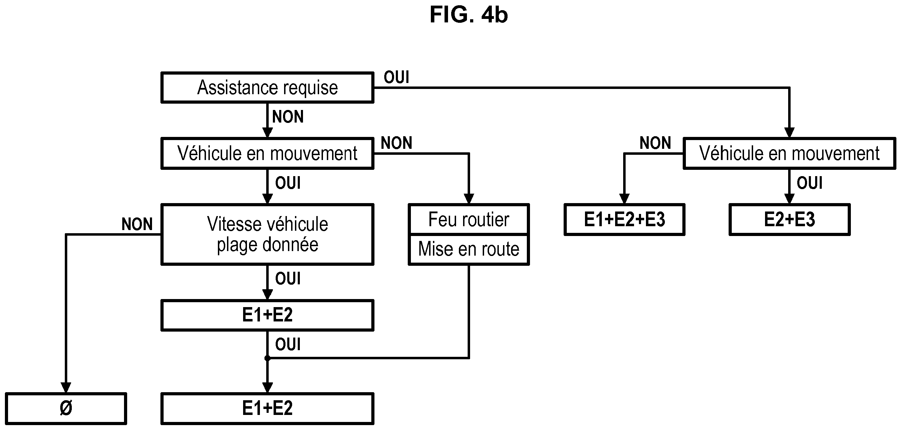

Dans un troisième mode de réalisation du procédé E, en référence à la figure 4b, le dispositif d'assistance comprend un réservoir 12, une pompe de gavage, de préférence à contra-rotation 10 et un ensemble de filtres, par exemple une crépine 101 et un filtre principal 103, comme précédemment décrit. Dans ce mode de réalisation, outre le balayage de la machine hydraulique, un décolmatage des filtres 101, 103 est avantageusement obtenu.

Le procédé E comprend alors les étapes consistant à mettre en service E1 la machine hydraulique 21, 23 durant une durée déterminée, par exemple par activation de la pompe de gavage 10, et à désactiver E2 la machine hydraulique 21, 23, à l'issu de l'étape de mise en service E1, de sorte à faire circuler du fluide hydraulique à travers les filtres 101, 103 successivement dans deux sens de circulation opposés. Comme précédemment décrit, la désactivation E2 peut être mise en œuvre par désactivation de la pompe de gavage 10, et reflux du fluide hydraulique vers le réservoir 12, ou par activation de la pompe de gavage 10 en sens contraire, si celle-ci est à contra-rotation. En outre, comme précédemment décrit, les étapes de mise en service E1 et de désactivation 2 sont mises en œuvre indépendamment d'une commande d'engagement et/ou de désengagement de l'assistance.

Avantageusement, le procédé E peut alors être mis en œuvre l'assistance étant requise par ailleurs. Dans ce cas, si le véhicule est en mouvement, l'étape de désactivation E2 coupe momentanément l'assistance. Le procédé E prévoit alors une étape de remise en service E3 consécutive à l'étape de désactivation E2, de sorte à assurer la sûreté du véhicule. De manière préférentielle, l'étape de désactivation E2 est mise en œuvre sur une durée correspondant à une rotation de roue 33 du véhicule. En particulier si une rotation d'une machine 21, 23 correspond à un tour de roue 23, la durée correspondra à une rotation complète d'une roue 23.

Le procédé E permet la mise en mouvement régulière des pièces du dispositif d'assistance hydraulique 2, même s'il n'est pas utilisé, ce qui évite d'avoir des usures ou des corrosions localisées au points de contact de pièces immobiles, il évite d'avoir du fluide hydraulique immobile qui pourrait recevoir des cycles thermiques répétés, et il évite d'avoir une sédimentation ou une polymérisation du fluide hydraulique. Egalement, il permet un décolmatage de filtres 101, 103. Par ses effets, il permet de garder le dispositif d'assistance hydraulique 2 opérationnel plus longtemps, entre deux intervalles de vidange du fluide hydraulique. Il peut en outre permettre d'espacer les dates de vidange, et donc de diminuer le cout d'exploitation du système.

Le système d'auto-maintenance 1 peut être utilisé au profit de tout dispositif d'assistance hydraulique à la traction, en particulier pour transformer une véhicule 4x2 en véhicule 4x4, ou pour assister des roues porteuses d'un véhicule, par exemple des roues directrices de camion, des essieux porteurs de camion ou de remorque, des essieux porteurs de machines de chantier ou agricoles, des transmissions hydrauliques temporaires basse vitesse pour véhicules de service ou de travaux, désignées sous le nom de « creep drive », ou des véhicules ou engins convertibles route / rail.

## Revendications

1. Système d'auto-maintenance (1) d'un dispositif d'assistance hydraulique (2) d'un véhicule, ledit dispositif (2) comprenant une machine hydraulique (21, 23), ladite machine hydraulique (21, 23) comprenant :
• une entrée de fluide (210, 230),
• une sortie de fluide (212, 232), et
• des éléments mobiles sous l'action d'un fluide hydraulique circulant au sein de la machine hydraulique (21, 23),
ladite machine hydraulique (21, 23) étant configurée pour :
• transformer une différence de pression entre l'entrée de fluide (210, 230) et la sortie de fluide (212, 232) en un couple moteur, et réciproquement, de sorte à assurer l'assistance hydraulique, la transformation étant mise en œuvre par mouvement d'éléments mobiles, et
• être alternativement :
∘ mise en service de sorte à engager l'assistance hydraulique, ou
∘ désactivée de sorte à désengager l'assistance hydraulique, la mise en service et la désactivation étant assurés par mouvement d'éléments mobiles de mise en service (211, 231), et l'engament et le désengagement de l'assistance étant pilotable sur commande,
le système (1) comprenant un module de pilotage (11) configuré pour commander la mise en service de la machine hydraulique (21,23) durant une durée déterminée, puis commander la désactivation de la machine hydraulique (21, 23) à l'issue de ladite durée de sorte à assurer un balayage de tout ou partie de la machine hydraulique (21, 23), lesdites commandes de mise en service et de désactivation étant indépendantes d'une commande d'engagement et de désengagement de l'assistance.

2. Système (1) selon la revendication 1, dans lequel le dispositif (2) comprend en outre :
• un réservoir (12), et
• une pompe de gavage (10), la pompe de gavage (10) comprenant :
∘ une entrée de fluide (100) mise en communication fluidique avec le réservoir (12), et
∘ une sortie de sortie (102) de fluide mise en communication fluidique avec la machine hydraulique (21, 23),
le dispositif (2) étant configuré pour faire circuler le fluide hydraulique alternativement :
• depuis le réservoir (12) vers la machine hydraulique (21, 23), par action de la pompe de gavage (10), pour mettre en service la machine hydraulique (21, 23), et
• depuis la machine hydraulique (21, 23) vers le réservoir (12) pour désactiver la machine hydraulique (21, 23).
le module de pilotage (11) étant configuré pour commander la pompe de gavage (10).

3. Système (1) selon l'une des revendications 1 ou 2, dans lequel les éléments mobiles de mise en service (211) sont indépendants, le module de pilotage (11) étant configuré pour commander la mise en service puis la désactivation de la machine hydraulique (21, 23) :
• le véhicule étant en mouvement, le balayage étant assuré par la circulation du fluide hydraulique lors de la transmission des mouvements du couple moteur aux éléments mobiles de la machine hydraulique (21, 23) en service, ou
• le véhicule étant à l'arrêt, le balayage étant partiellement assuré par les mouvements des éléments mobiles de mise en service (211) lors de la mise en service et de la désactivation successifs de la machine hydraulique (21, 23).

4. Système (1) selon l'une des revendications 1 ou 2, dans lequel les éléments mobiles de mise en service (231) sont dépendants, le module de pilotage (11) étant configuré pour commander la mise en service puis la désactivation de la machine hydraulique (21, 23) :
• le véhicule étant en mouvement, le balayage étant assuré par la circulation du fluide hydraulique lors de la transmission des mouvements du couple moteur aux éléments mobiles de la machine hydraulique (21, 23) mise en service, ou
• le véhicule étant à l'arrêt, le balayage étant assuré par les mouvements des éléments mobiles de mise en service (231) lors de la mise en service et de la désactivation successifs de la machine hydraulique (21, 23).

5. Système (1) selon l'une des revendications 1 à 4, dans lequel la machine hydraulique (21, 23) est une pompe hydraulique de puissance (21) reliée à un groupe motopropulseur (31) du véhicule.

6. Système (1) selon l'une des revendications 1 à 5, dans lequel la machine hydraulique (21, 23) est un moteur hydraulique (23) relié à une roue (33) du véhicule.

7. Système (1) selon l'une des revendications 1 à 6, dans lequel le dispositif (2) comprend :
• une première machine hydraulique (21), et
• une deuxième machine hydraulique (23),
l'entrée de fluide (210) de la première machine (21) étant mise en communication fluidique avec la sortie de fluide (232) de la deuxième machine (23), et
l'entrée de fluide (230) de la deuxième machine (23) étant mise en communication fluidique à la sortie de fluide (212) de la première machine (21),
le module de pilotage (11) étant configuré pour commander la mise en service puis la désactivation de la première machine hydraulique (21) indépendamment de la mise en service puis de la désactivation de la deuxième machine hydraulique (23).

8. Véhicule comprenant un dispositif d'assistance hydraulique (2), et comprenant en outre un système d'auto-maintenance (1) selon l'une des revendications 1 à 7.

9. Procédé d'auto-maintenance (E) d'un dispositif d'assistance hydraulique (2) d'un véhicule, ledit dispositif (2) comprenant une machine hydraulique (21, 23), ladite machine hydraulique (21, 23) comprenant :
• une entrée de fluide (210, 230),
• une sortie de fluide (212, 232), et
• des éléments mobiles sous l'action d'un fluide hydraulique circulant au sein de la machine hydraulique (21, 23),
ladite machine hydraulique (21, 23) étant configurée pour :
• transformer une différence de pression entre l'entrée de fluide (210, 230) et la sortie de fluide (212, 232) en un couple moteur, et réciproquement, de sorte à assurer l'assistance hydraulique, la transformation étant mise en œuvre par mouvement d'éléments mobiles, et
• être alternativement :
∘ mise en service de sorte à engager l'assistance hydraulique, ou
∘ désactivée de sorte à désengager l'assistance hydraulique, la mise en service et la désactivation étant assurés par mouvement d'éléments mobiles de mise en service (211, 231), et l'engament et le désengagement de l'assistance étant pilotable sur commande,
le procédé (E1) comprenant les étapes consistant à
• mettre en service (E1) la machine hydraulique (21, 23) durant une durée déterminée, puis
• désactiver (E2) la machine hydraulique (21, 23) à l'issue de ladite durée, de sorte à assurer un balayage de tout ou partie de la machine hydraulique (21, 23),
les étapes de mise en service (E1) et de désactivation (E2) étant mises en œuvre indépendamment d'une commande d'engagement et/ou de désengagement de l'assistance, le procédé étant mis en œuvre par un système d'auto-maintenance (1) selon l'une quelconque des revendications 1 à 7.

10. Procédé (E) selon la revendication 9, dans lequel le procédé (E) est mis en œuvre pour une plage donnée de vitesse du véhicule, par exemple la vitesse du véhicule étant comprise entre 0 et 40 km/h.

11. Procédé (E) selon l'une des revendications 9 ou 10, dans lequel les étapes de mise en service (E1) et de désactivation (E2) sont répétées successivement à une fréquence donnée.

12. Procédé (E) selon l'une des revendications 9 à 11, dans lequel le procédé (E) est mis en œuvre à partir d'un niveau d'usure donné du fluide hydraulique.

13. Procédé (E) selon l'une des revendications 9 à 12, dans lequel le procédé (E) est mis en œuvre à chaque mise en route du véhicule.

14. Procédé (E) selon l'une des revendications 9 à 13, dans lequel le procédé (E) est mis en œuvre à une cadence donnée, ladite cadence pouvant être
• fonctionnelle, par exemple à chaque fois que le véhicule a parcouru une distance donnée, et/ou
• temporelle, par exemple une fois tous les mois de fonctionnement du véhicule.

## Patentansprüche

1. System (1) zur Selbstwartung einer hydraulischen Hilfsvorrichtung (2) eines Fahrzeugs, wobei die Vorrichtung (2) eine hydraulische Maschine (21, 23) umfasst, wobei die hydraulische Maschine (21, 23) umfasst:
• einen Fluideingang (210, 230),
• einen Fluidausgang (212, 232), und
• Elemente, die unter der Wirkung eines Hydraulikfluids, das in der hydraulischen Maschine (21, 23) umläuft, beweglich sind,
wobei die hydraulische Maschine (21, 23) für Folgendes ausgestaltet ist:
• Umwandeln eines Druckunterschieds zwischen dem Fluideingang (210, 230) und dem Fluidausgang (212, 232) in ein Antriebsmoment und umgekehrt, derart, dass die hydraulische Hilfe gewährleistet wird, wobei die Umwandlung durch Bewegung beweglicher Elemente durchgeführt wird, und
• abwechselnd:
∘ in Betrieb genommen zu werden, derart, dass die hydraulische Hilfe eingeschaltet wird, oder
∘ deaktiviert zu werden, derart, dass die hydraulische Hilfe ausgeschaltet wird,
wobei die Inbetriebnahme und die Deaktivierung durch Bewegung beweglicher Inbetriebnahmeelemente (211, 231) gewährleistet werden und das Einschalten und das Ausschalten der Hilfe auf Befehl regelbar sind,
wobei das System (1) ein Regelungsmodul (11) umfasst, das dazu ausgestaltet ist, die Inbetriebnahme der hydraulischen Maschine (21, 23) während einer bestimmten Dauer zu steuern, und dann das Ausschalten der hydraulischen Maschine (21, 23) am Ende der Dauer zu steuern, derart, dass ein Spülen der gesamten hydraulischen Maschine (21, 23) oder eines Teils davon gewährleistet wird, wobei die Befehle zur Inbetriebnahme und zur Deaktivierung unabhängig von einem Einschalt- und Ausschaltbefehl der Hilfe sind.

2. System (1) nach Anspruch 1, wobei die Vorrichtung (2) ferner umfasst:
• einen Behälter (12), und
• eine Ladepumpe (10), wobei die Ladepumpe (10) umfasst:
∘ einen Fluideingang (100), der mit dem Behälter (12) in Fluidverbindung gesetzt ist, und
∘ einen Fluidausgang (102), der mit der hydraulischen Maschine (21, 23) in Fluidverbindung gesetzt ist,
wobei die Vorrichtung (2) dazu ausgestaltet ist, das Hydraulikfluid abwechselnd in Umlauf zu bringen:
• vom Behälter (12) hin zu der hydraulischen Maschine (21, 23) durch Wirkung der Ladepumpe (10), um die hydraulische Maschine (21, 23) in Betrieb zu setzen, und
• von der hydraulischen Maschine (21, 23) hin zu dem Behälter (12), um die hydraulische Maschine (21, 23) zu deaktivieren,
wobei das Regelungsmodul (11) dazu ausgestaltet ist, die Ladepumpe (10) zu steuern.

3. System (1) nach einem der Ansprüche 1 oder 2, wobei die beweglichen Inbetriebnahmeelemente (211) unabhängig sind, wobei das Regelungsmodul (11) dazu ausgestaltet ist, die Inbetriebnahme und dann die Deaktivierung der hydraulischen Maschine (21, 23) zu steuern:
• wobei, wenn das Fahrzeug in Bewegung ist, das Spülen durch den Umlauf des Hydraulikfluids bei der Übertragung der Bewegungen des Antriebsmoments auf die beweglichen Elemente der sich im Betrieb befindlichen hydraulischen Maschine (21, 23) gewährleistet wird, oder
• wobei, wenn das Fahrzeug angehalten ist, das Spülen teilweise durch die Bewegungen der beweglichen Inbetriebnahmeelemente (211) bei der aufeinanderfolgenden Inbetriebnahme und Deaktivierung der hydraulischen Maschine (21, 23) gewährleistet wird.

4. System (1) nach einem der Ansprüche 1 oder 2, wobei die beweglichen Inbetriebnahmeelemente (231) abhängig sind, wobei das Regelungsmodul (11) dazu ausgestaltet ist, die Inbetriebnahme und dann die Deaktivierung der hydraulischen Maschine (21, 23) zu steuern:
• wobei, wenn das Fahrzeug in Bewegung ist, das Spülen durch den Umlauf des Hydraulikfluids bei der Übertragung der Bewegungen des Antriebsmoments auf die beweglichen Elemente der in Betrieb genommenen hydraulischen Maschine (21, 23) gewährleistet wird, oder
• wobei, wenn das Fahrzeug angehalten ist, das Spülen durch die Bewegungen der beweglichen Inbetriebnahmeelemente (231) bei der aufeinanderfolgenden Inbetriebnahme und Deaktivierung der hydraulischen Maschine (21, 23) gewährleistet wird.

5. System (1) nach einem der Ansprüche 1 bis 4, wobei die hydraulische Maschine (21, 23) eine hydraulische Leistungspumpe (21) ist, die mit einem Antriebsstrang (31) des Fahrzeugs verbunden ist.

6. System (1) nach einem der Ansprüche 1 bis 5, wobei die hydraulische Maschine (21, 23) ein Hydraulikmotor (23) ist, der mit einem Rad (33) des Fahrzeugs verbunden ist.

7. System (1) nach einem der Ansprüche 1 bis 6, wobei die Vorrichtung (2) umfasst:
• eine erste hydraulische Maschine (21), und
• eine zweite hydraulische Maschine (23),
wobei der Fluideingang (210) der ersten Maschine (21) mit dem Fluidausgang (232) der zweiten Maschine (23) in Fluidverbindung gesetzt ist, und
der Fluideingang (230) der zweiten Maschine (23) mit dem Fluidausgang (212) der ersten Maschine (21) in Fluidverbindung gesetzt ist,
wobei das Regelungsmodul (11) dazu ausgestaltet ist, die Inbetriebnahme und dann die Deaktivierung der ersten hydraulischen Maschine (21) unabhängig von der Inbetriebnahme und dann der Deaktivierung der zweiten hydraulischen Maschine (23) zu steuern.

8. Fahrzeug, das eine hydraulische Hilfsvorrichtung (2) umfasst und ferner ein Selbstwartungssystem (1) nach einem der Ansprüche 1 bis 7 umfasst.

9. Selbstwartungsverfahren (E) einer hydraulischen Hilfsvorrichtung (2) eines Fahrzeugs, wobei die Vorrichtung (2) eine hydraulische Maschine (21, 23) umfasst, wobei die hydraulische Maschine (21, 23) umfasst:
• einen Fluideingang (210, 230),
• einen Fluidausgang (212, 232), und
• Elemente, die unter der Wirkung eines Hydraulikfluids, das in der hydraulischen Maschine (21, 23) umläuft, beweglich sind,
wobei die hydraulische Maschine (21, 23) für Folgendes ausgestaltet ist:
• Umwandeln eines Druckunterschieds zwischen dem Fluideingang (210, 230) und dem Fluidausgang (212, 232) in ein Antriebsmoment und umgekehrt, derart, dass die hydraulische Hilfe gewährleistet wird, wobei die Umwandlung durch Bewegung beweglicher Elemente durchgeführt wird, und
• abwechselnd:
∘ in Betrieb genommen zu werden, derart, dass die hydraulische Hilfe eingeschaltet wird, oder
∘ deaktiviert zu werden, derart, dass die hydraulische Hilfe ausgeschaltet wird,
wobei die Inbetriebnahme und die Deaktivierung durch Bewegung beweglicher Inbetriebnahmeelemente (211, 231) gewährleistet werden und das Einschalten und das Ausschalten der Hilfe auf Befehl regelbar sind,
wobei das Verfahren (E1) die Schritte umfasst, die darin bestehen:
• die hydraulische Maschine (21, 23) während einer bestimmten Dauer in Betrieb zu nehmen (E1), und dann
• die hydraulische Maschine (21, 23) am Ende der Dauer zu deaktivieren (E2), derart dass ein Spülen der gesamten hydraulischen Maschine (21, 23) oder eines Teils davon gewährleistet wird,
wobei die Schritte der Inbetriebnahme (E1) und der Deaktivierung (E2) unabhängig von einem Befehl zum Einschalten und/oder Ausschalten der Hilfe durchgeführt werden, wobei das Verfahren durch ein Selbstwartungssystem (1) nach einem der Ansprüche 1 bis 7 durchgeführt wird.

10. Verfahren (E) nach Anspruch 9, wobei das Verfahren (E) für einen gegebenen Geschwindigkeitsbereich des Fahrzeugs durchgeführt wird, wobei die Geschwindigkeit zum Beispiel zwischen 0 und 40 km/h beträgt.

11. Verfahren (E) nach einem der Ansprüche 9 oder 10, wobei die Schritte der Inbetriebnahme (E1) und der Deaktivierung (E2) aufeinanderfolgend mit einer gegebenen Häufigkeit wiederholt werden.

12. Verfahren (E) nach einem der Ansprüche 9 bis 11, wobei das Verfahren (E) ausgehend von einem gegebenen Verschleißniveau des Hydraulikfluids durchgeführt wird.

13. Verfahren (E) nach einem der Ansprüche 9 bis 12, wobei das Verfahren (E) bei jeder Inbetriebnahme des Fahrzeugs durchgeführt wird.

14. Verfahren (E) nach einem der Ansprüche 9 bis 13, wobei das Verfahren (E) in einem gegebenen Rhythmus durchgeführt wird, wobei dieser Rhythmus sein kann:
• betrieblich, zum Beispiel jedes Mal, nachdem das Fahrzeug eine gegebene Strecke zurückgelegt hat, und/oder
• zeitlich, zum Beispiel ein Mal in jedem Betriebsmonat des Fahrzeugs.

## Claims

1. A self-maintenance system (1) of a hydraulic assistance device (2) of a vehicle, said device (2) comprising a hydraulic machine (21, 23), said hydraulic machine (21, 23) comprising:
• a fluid inlet (210, 230),
• a fluid outlet (212, 232), and
• elements movable under the action of a hydraulic fluid circulating within the hydraulic machine (21, 23),
said hydraulic machine (21, 23) being configured to:
• convert a pressure difference between the fluid inlet (210, 230) and the fluid outlet (212, 232) into a drive torque, and reciprocally, such as to provide the hydraulic assistance, the conversion being implemented by the movement of movable elements, and
• be alternatively:
∘ operated such as to engage the hydraulic assistance,
∘ disabled such as to disengage the hydraulic assistance,
the operating and the disabling being provided by the movement of starting movable elements (211, 231), and the engagement and disengagement of the assistance being controllable on command,
the system (1) comprising a controlling module (11) configured to command the operating of the hydraulic machine (21,23) during a determined time period, then command the disabling of the hydraulic machine (21, 23) at the end of said time period such as to ensure the flushing of all or part of the hydraulic machine (21, 23), said operating and disabling commands being independent of a command of engagement and disengagement of the assistance.

2. The system (1) as claimed in claim 1, wherein the device (2) further comprises:
• a reservoir (12), and
• a feed pump (10), the feed pump (10) comprising:
∘ a fluid inlet (100) put in fluid communication with the reservoir (12), and
∘ a fluid outlet (102) put in fluid communication with the hydraulic machine (21, 23),
the device (2) being configured to circulate the hydraulic fluid alternatively:
• from the reservoir (12) to the hydraulic machine (21, 23), through activation of the feed pump (10), to operate the hydraulic machine (21, 23), and
• from the hydraulic machine (21, 23) to the reservoir (12) to disable the hydraulic machine (21, 23).
the controlling module (11) being configured to command the feed pump (10).

3. The system (1) as claimed in one of claims 1 or 2, wherein the starting movable elements (211) are independent, the controlling module (11) being configured to command the operating then the disabling of the hydraulic machine (21, 23):
• the vehicle being in movement, the flushing being provided by the circulation of the hydraulic fluid upon the transmission of the movements of the drive torque to the movable elements of the operated hydraulic machine (21, 23), or
• the vehicle being stopped, the flushing being partly provided by the movements of the starting movable elements (211) during the successive operating and disabling of the hydraulic machine (21, 23).

4. The system (1) as claimed in one of claims 1 or 2, wherein the starting movable elements (231) are dependent, the controlling module (11) being configured to command the operating then the disabling of the hydraulic machine (21, 23):
• the vehicle being in movement, the flushing being provided by the circulation of the hydraulic fluid upon the transmission of the movements of the drive torque to the movable elements of the operated hydraulic machine (21, 23), or
• the vehicle being stopped, the flushing being provided by the movements of the starting movable elements (231) during the successive operating and disabling of the hydraulic machine (21, 23).

5. The system (1) as claimed in one of claims 1 to 4, wherein the hydraulic machine (21, 23) is a hydraulic power pump (21) linked to a powertrain (31) of the vehicle.

6. The system (1) as claimed in one of claims 1 to 5, wherein the hydraulic machine (21, 23) is a hydraulic motor (23) linked to a wheel (33) of the vehicle.

7. The system (1) as claimed in one of claims 1 to 6, wherein the device (2) comprises:
• a first hydraulic machine (21), and
• a second hydraulic machine (23),
the fluid inlet (210) of the first machine (21) being put in fluid communication with the fluid outlet (232) of the second machine (23), and
the fluid inlet (230) of the second machine (23) being put in fluid communication at the fluid outlet (212) of the first machine (21),
the controlling module (11) being configured to command the operating then the disabling of the first hydraulic machine (21) independently of the operating then the disabling of the second hydraulic machine (23).

8. A vehicle comprising a hydraulic assistance device (2), and further comprising a self-maintenance system (1) as claimed in one of claims 1 to 7.

9. A self-maintenance method (E) of a hydraulic assistance device (2) of a vehicle, said device (2) comprising a hydraulic machine (21, 23), said hydraulic machine (21, 23) comprising:
• a fluid inlet (210, 230),
• a fluid outlet (212, 232), and
• elements which are movable under the action of a hydraulic fluid circulating within the hydraulic machine (21, 23),
said hydraulic machine (21, 23) being configured to:
• convert a pressure difference between the fluid inlet (210, 230) and the fluid outlet (212, 232) into a drive torque, and reciprocally, such as to provide the hydraulic assistance, the conversion being implemented by the movement of movable elements, and
• be alternatively:
∘ operated such as to engage the hydraulic assistance, or
∘ disabled such as to disengage the hydraulic assistance,
the operating and the disabling being provided by the movement of starting movable elements (211, 231), and the engagement and disengagement of the assistance being controllable on command,
the method (E1) comprising the steps consisting in
• operating the hydraulic machine (21, 23) (E1) for a determined time period, then
• disabling (E2) the hydraulic machine (21, 23) at the end of said time period so as to provide the flushing of all or part of the hydraulic machine (21, 23),
the steps of operating (E1) and disabling (E2) being implemented independently of a command of engagement and/or disengagement of the assistance, the method being implemented by a self-maintenance system (1) as claimed in any one of claims 1 to 7.

10. The method (E) as claimed in claim 9, wherein the method (E) is implemented for a given range of vehicle speeds, for example the vehicle speed being between 0 and 40 km/h.

11. The method (E) as claimed in one of claims 9 or 10, wherein the steps of operating (E1) and disabling (E2) are successively repeated with a given frequency.

12. The method (E) as claimed in one of claims 9 to 11, wherein the method (E) is implemented from a given level of wear of the hydraulic fluid.

13. The method (E) as claimed in one of claims 9 to 12, wherein the method (E) is implemented each time the vehicle is started up.

14. The method (E) as claimed in one of claims 9 to 13, wherein the method (E) is implemented at a given rate, said rate being
• either functional, for example each time the vehicle has travelled a given distance, and/or
• temporal, for example once every month of operation of the vehicle.
